# EUROPEAN PATENT SPECIFICATION

(11) **EP 1 550 621 B1**
(45) Date of publication and mention of the grant of the patent: **07.03.2007**
(21) Application number: 04380272.7
(22) Date of filing: 27.12.2004
(51) Int. Cl.: B65F 1/00, B65F 1/14

(54) **Module for classification, accumulation of waste and reduction in volume of recyclable waste**
Modul zur Klassifikation, Sammlung und Volumenverminderung von wiederverwertbarem Abfall
Module de classification, emmagasinage et réduction du volume des déchets recyclables

(30) Priority: 30.12.2003 ES 200303079 P
(43) Date of publication of application: 06.07.2005
(73) Proprietor: Monso Bergua, Antonio, 25620 Tremp (LLeida) (ES)
(72) Inventor: Monso Bergua, Antonio, 25620 Tremp (LLeida) (ES)
(74) Representative: Carpintero Lopez, Francisco

(56) References cited:
- EP-A- 1 074 486
- EP-A- 1 269 887
- WO-A-00/26119
- WO-A-91/13010
- DE-A1- 19 500 672
- US-A- 4 847 927

## Description

### OBJECT OF THE INVENTION

The present invention relates to a module which centralizes in a reduced space the destination of the organic waste and recyclable material produced in a dwelling house or catering business. Among the recyclable materials are included carton type containers, plastic containers, glass containers, metallic containers, paper, cardboard, electric batteries and other objects of mixed composition.

It is an object of the invention that the module incorporates manual mechanisms for destruction and/or reduction in volume of the plastic containers, glass containers, metallic containers and carton type containers, and also that it is equipped with means for accumulation of these and of the rest of the waste, which can also constitute the means for the transport and subsequent discharge thereof in the containers installed in the street.

### BACKGROUND OF THE INVENTION

The authorities and the citizenry are increasingly aware of the need for the classification and recycling of the different types of waste which are produced in the home or in catering businesses to encourage thereby a control which results in a better conservation of the environment.

The installation in the streets of different containers for the storage and disposal of different types of waste has taught the consumer to practice classifying and storing in different bags, bins or other appliances, each type of waste, be it organic, paper or cardboard, containers in general, glass, batteries, etc., resulting in any case in the occupation of considerable space in the home which is annoying for the consumer.

The use is known of a type of compartmentalised bin with its corresponding bags which are used in the home to facilitate the classified collection of the different types of waste, however the volume of certain types of containers determines that the corresponding compartment is filled in a short time and it becomes necessary to remove the bag and deposit it in the street container on a fairly frequent basis.

Moreover the work of reducing the volume and recovering the recyclable waste is generally carried out in the location to which the street containers are transported when full.

EP 1269887 A1 discloses a module for segregated collection of waste having on L-shaped support structure. WO 91/13010 A1 discloses another module having several compacting means.

The possibility of reducing the volume of the recyclable waste in origin in a single module which integrates various mechanisms of destruction according to the type of waste, and collection bins to store and transport the different types of recyclable and non-recyclable waste would facilitate its classification and its accumulation with a considerable reduction of the space occupied, as well as obtaining longer intervals of time between emptying operations. The development of a module which integrates these features is made feasible by the invention which is disclosed below.

### DESCRIPTION OF THE INVENTION

The module for classification, accumulation of waste and reduction in volume of recyclable waste which constitutes the object of the invention is defined by claim 1 and is of application for dwelling houses and catering businesses, and it allows a selection to be established of all types of waste and its destruction or reduction in size in origin of those items which occupy a larger space, namely, glass containers, plastic containers, carton type containers and metallic containers.

The module centralizes in a reduced space the initial destination of most of the waste produced in a dwelling house or catering business with a readjustment of the waste accumulating capacity based on the reduction in volume of the recyclable waste described above.

Said module encourages the personal determination to classify recyclable products in origin by putting it necessarily always in the appropriate place within limits of volume and quantity, being complemented with a prior task of destruction and elimination which can stimulate the consumer's satisfaction with a clear and fundamentally practical result.

The module is of great simplicity in that the mechanisms of destruction and reduction in volume are operated manually and require hardly any effort.

In the case of recyclable waste which is going to be reduced in volume, it is first rinsed, then subjected to the reduction process and stored in the corresponding collection bins occupying less space which will allow an extension in the interval required for the disposal of these. The collection bins for the recyclable waste can be carried by hand to the street containers where it will be deposited by waste type, thereby replacing the necessary use of plastic bags.

Also the considerable decrease in volume of the recyclable material allows a greater quantity to be accumulated in the street containers.

The module comprises fundamentally the elements which are described below:
- A supporting structure in which the adequately compartmentalised mechanisms are located for reduction of volume and their associated collection bins and which have fundamentally a broad base and front removable by means of wheels with respect to a cabinet in which it is usually incorporated.
- A mechanism for breaking glass containers which has means for supporting the container and an articulated hammer to strike and break it, and it also incorporates a collection bin for broken glass.
- A mechanism for destroying plastic containers which fundamentally includes a ring with some flat blades arranged radially against which the container is pushed to be cut longitudinally, and a collection bin for plastics with ejection bar incorporated to facilitate emptying later.
- A mechanism for crushing metallic containers which has a lever with blade and fishplate designed so that in the swivelling movement of said lever against the container located on a flat support crushes the metallic container, and it also incorporates a collection bin for metallic containers.
- A mechanism for pressing carton type containers associated with a collection bin into which they are inserted and flattened by means of a piston presser with the collaboration of the aforementioned lever.
- A paper and cardboard collection bin in which such waste is held and which is equipped with a closing means which also facilitates the transport and emptying thereof in the street container.
- A collection bin for small objects of mixed composition which consists of a drawer type compartment with handle for the opening and closing thereof.
- A collection bin for disposable batteries mounted in a space immediately below the flat support.
- A collection bin for organic waste with receiving mouth, equipped with means to facilitate the transport thereof.
- A storage tank for waste organic oils used in the preparation of food.
- A removable tray with an opening which facilitates the job of insertion of the organic waste into the collection bin.
- A tray with compartments, support of the waste oil tank and of cleaning utensils and products.

### DESCRIPTION OF THE DRAWINGS

To supplement the description which is being made and with the object of assisting in a better understanding of the characteristics of the invention, in accordance with a preferred practical embodiment thereof, said description is accompanied with a set of drawings, as an integral part thereof, wherein by way of illustration and not restrictively, the following has been represented:
Figure 1. - It shows a view in perspective from the left of the extracted module object of this invention.
Figure 2. - It shows a view in perspective from the right of the extracted module.
Figure 3. - It shows a left side view of the module in its position outside the cabinet in which it is usually incorporated.
Figure 4. - It shows a right side view of the module in its position outside the cabinet in which it is usually incorporated.
Figure 5. - It shows a plan view of the module.

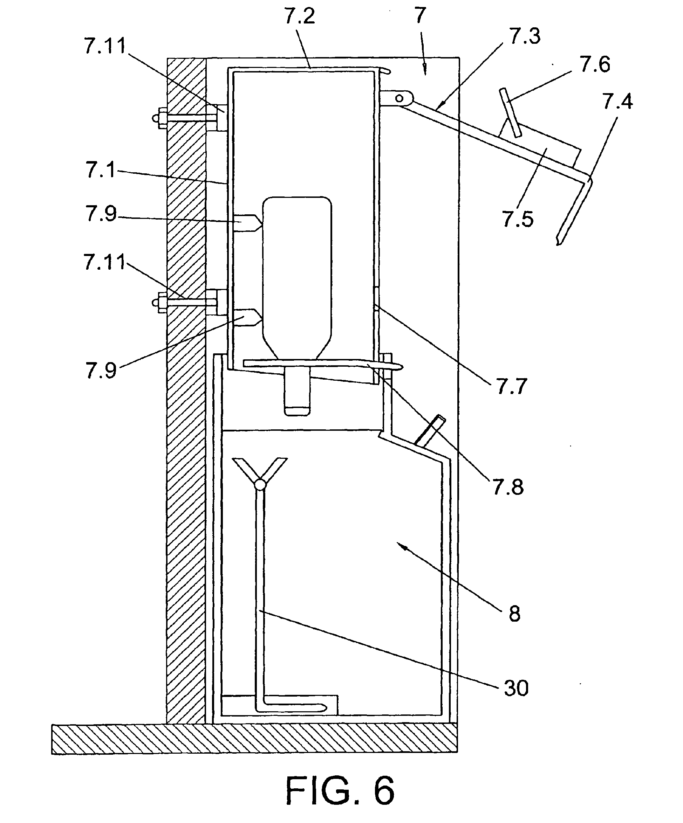

Figure 6. - It shows a sectional view of the mechanism for breaking glass containers and the collection bin thereof in the upper position of the hammer.

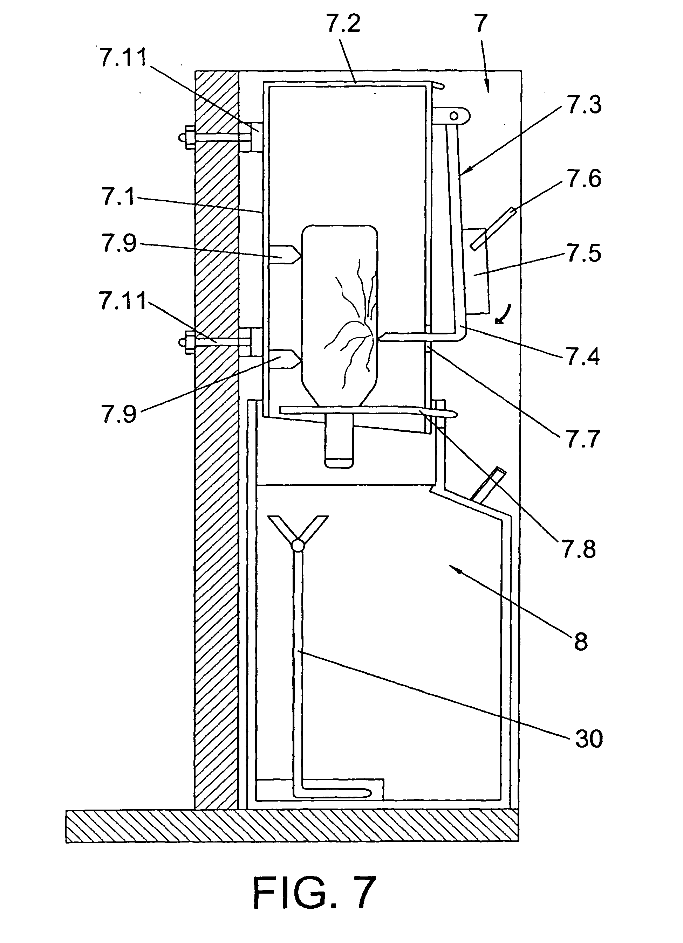

Figure 7. - It shows a sectional view of a phase subsequent to that represented in the previous figure at the moment in which the hammer strikes the glass container.

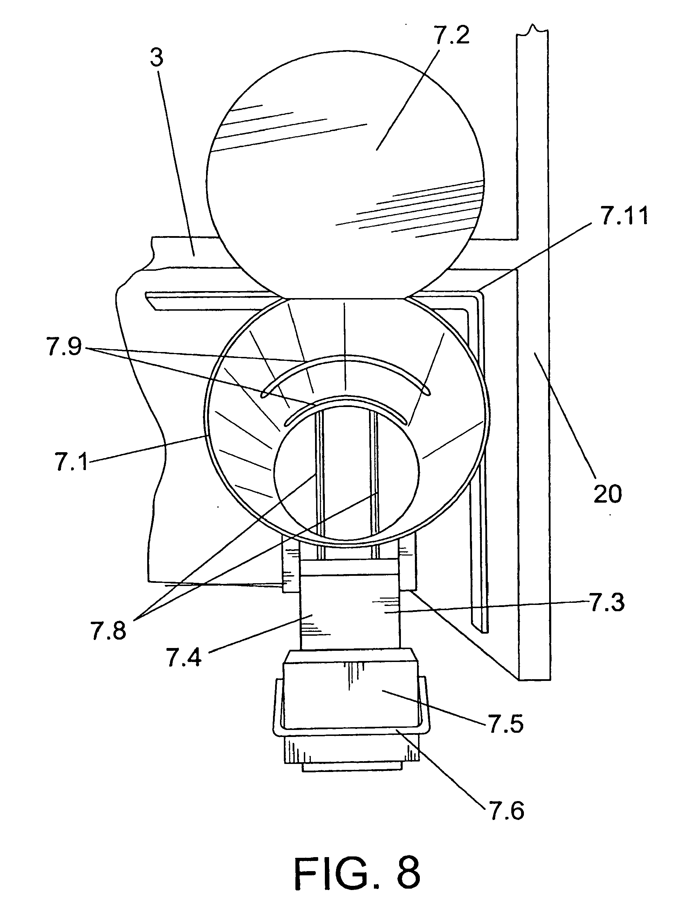

Figure 8. - It shows a plan view of the mechanism for breaking glass containers with the cover open and the hammer in the raised position.

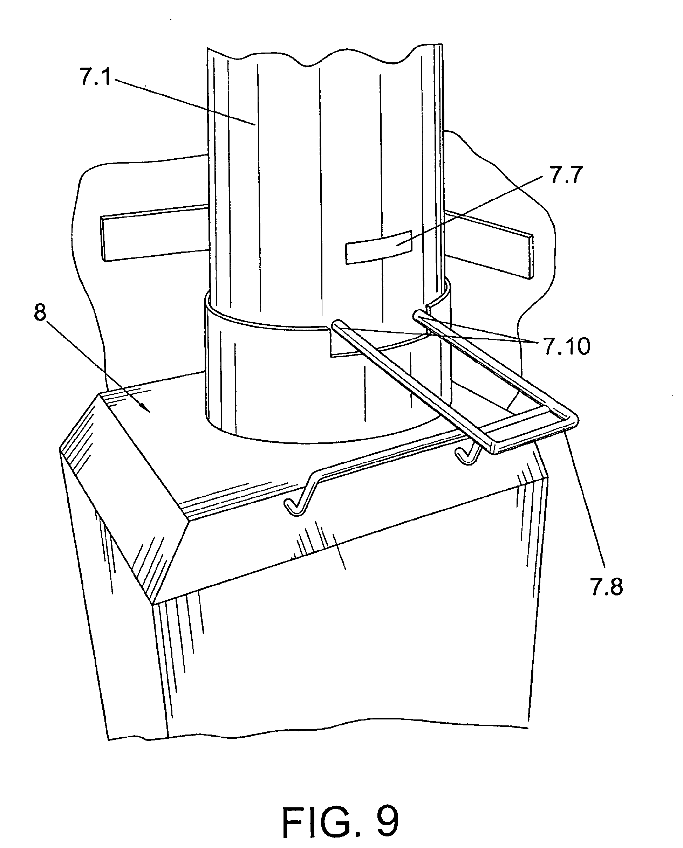

Figure 9. - It shows a detail of the compartment of the glass container breaking mechanism mounted on the collection bin for glass container remains, with the fork on which the container rests inside the compartment in the extracted position.

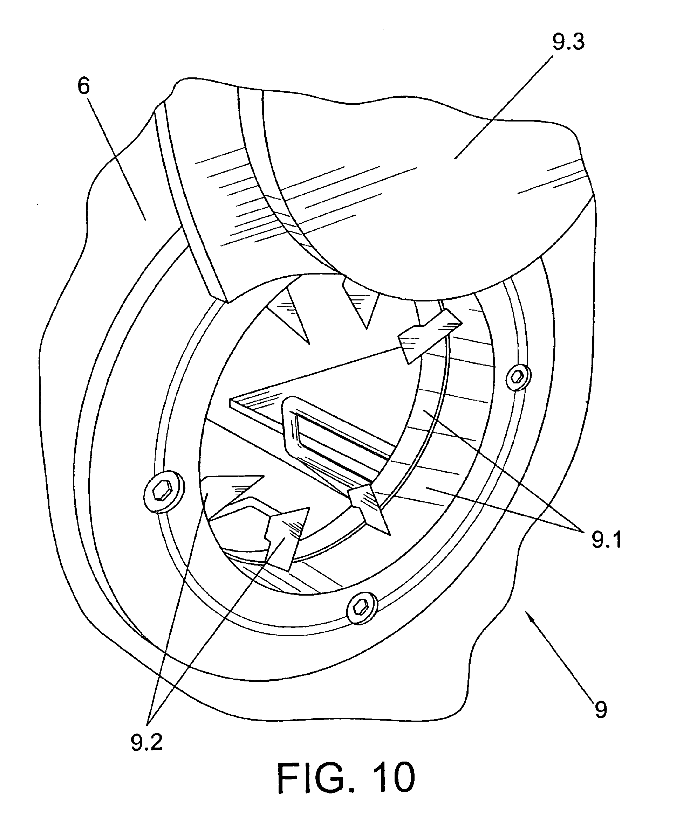

Figure 10. - It shows a view in perspective of the plastic container destroyer with the protective cover folded back.
Figure 11. - It shows a detail of the process of destroying a plastic container.
Figure 12. - It shows a sectional view of the plastic container destroyer and the collection bin thereof.
Figure 13. - It shows a side view in cross-section of the mechanism for crushing metallic containers and of the mechanism for flattening carton type containers.
Figure 14. - It shows a view in detail from the previous figure of a section of the lever mounted on the hinge.
Figure 15. - It shows a view in perspective of the phases of crushing a metallic container.

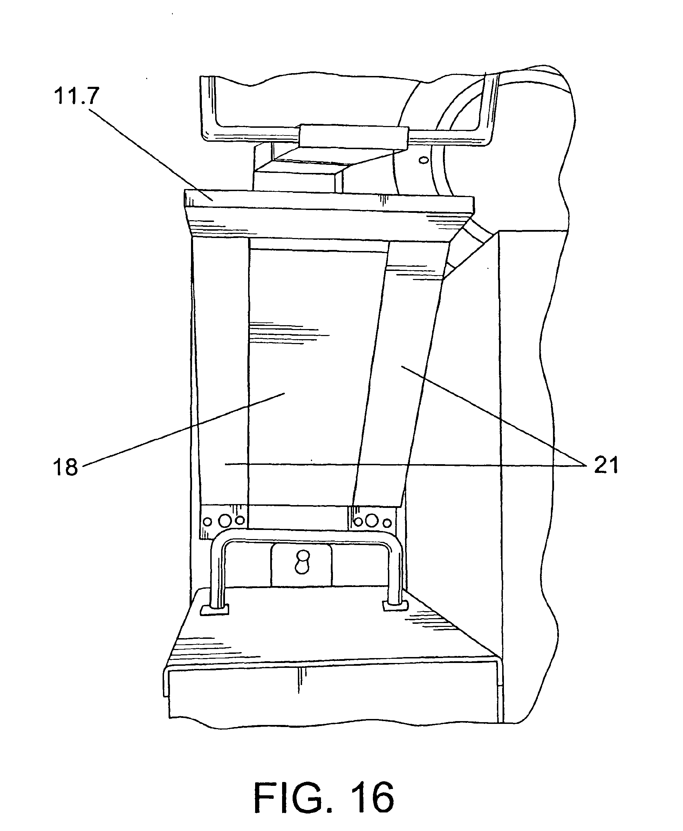

Figure 16. - It shows a view in perspective of the entrance to the battery deposit.

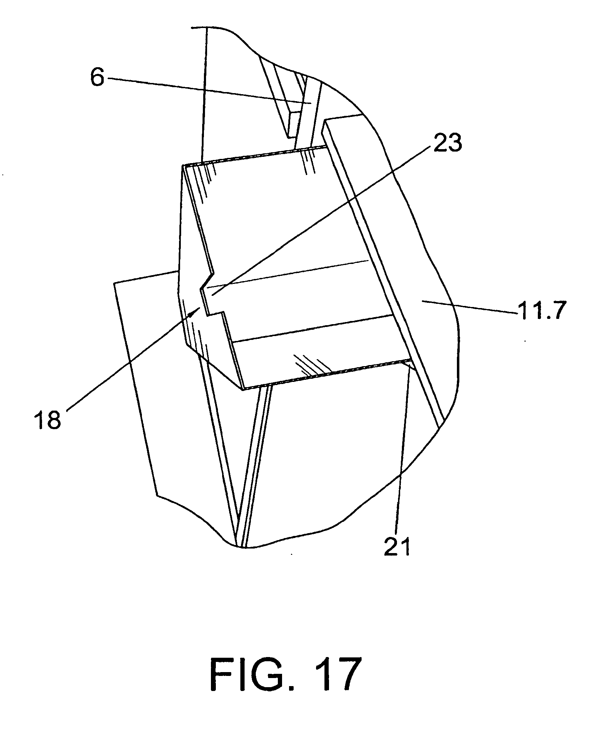

Figure 17. - It shows a view in perspective of the battery deposit.

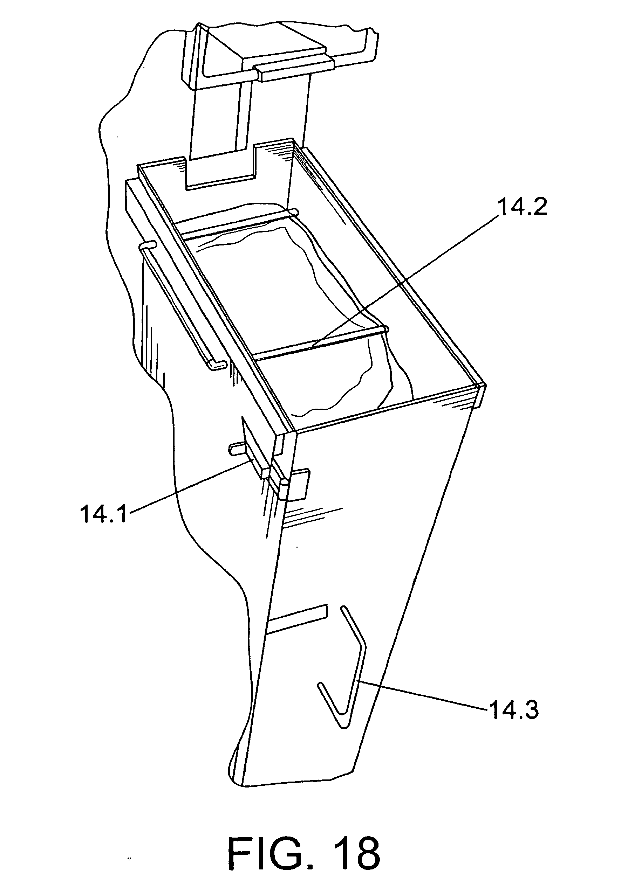

Figure 18. - It shows a view in perspective of the carton collection bin with its top face open in which there is a fork which delimits the position of the flattened carton containers to prevent them escaping during transport.

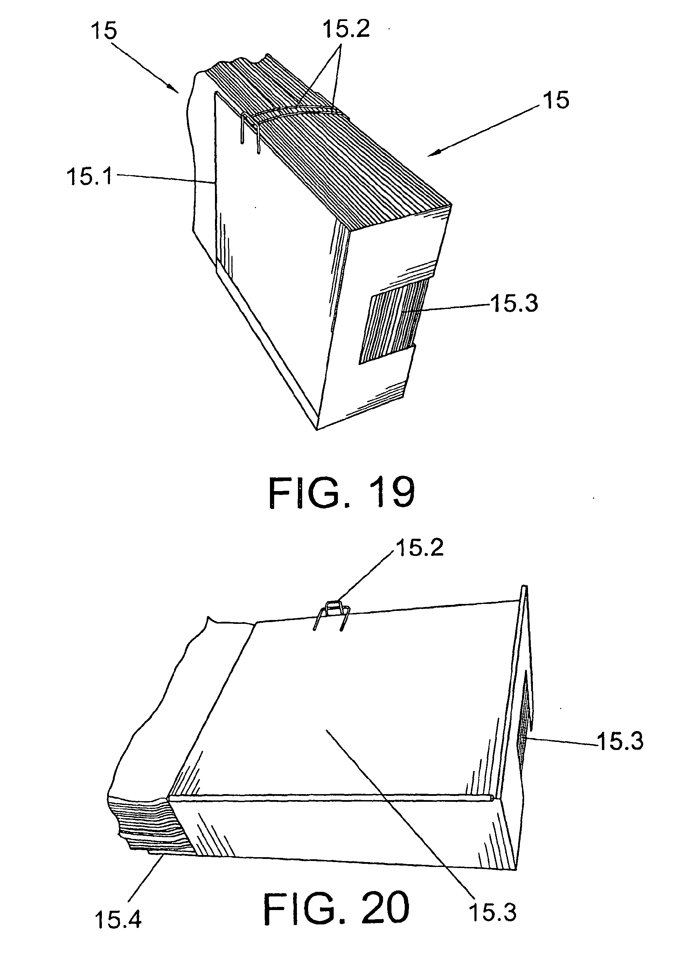

Figure 19. - It shows a view in perspective of the collection bin for paper and cardboard containers with magazines and newspapers inside.
Figure 20. - It shows a view in perspective of the collection bin for paper and cardboard containers resting on its base.

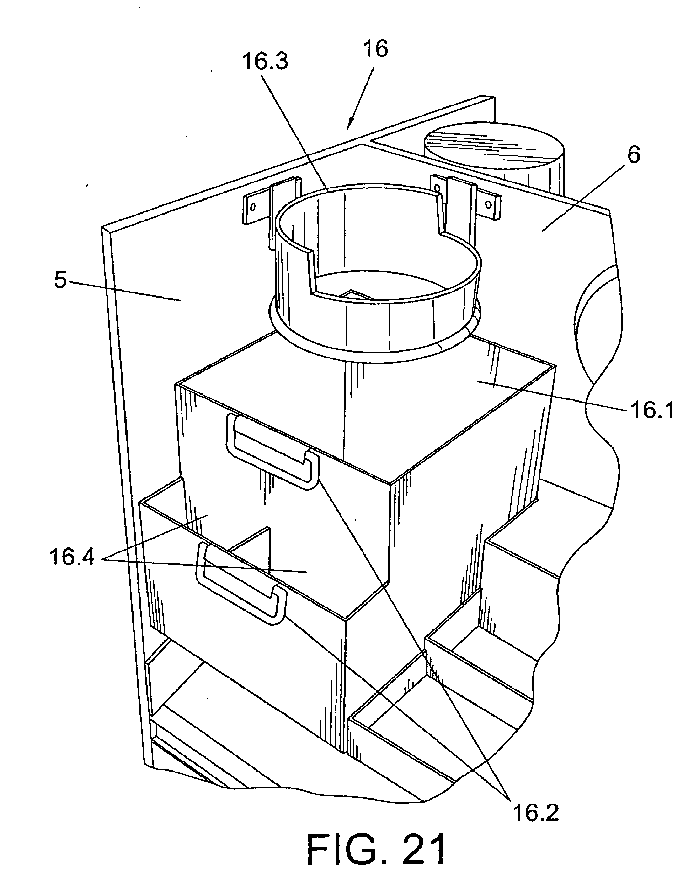

Figure 21. It shows a view in perspective of the collection bin for organic waste.

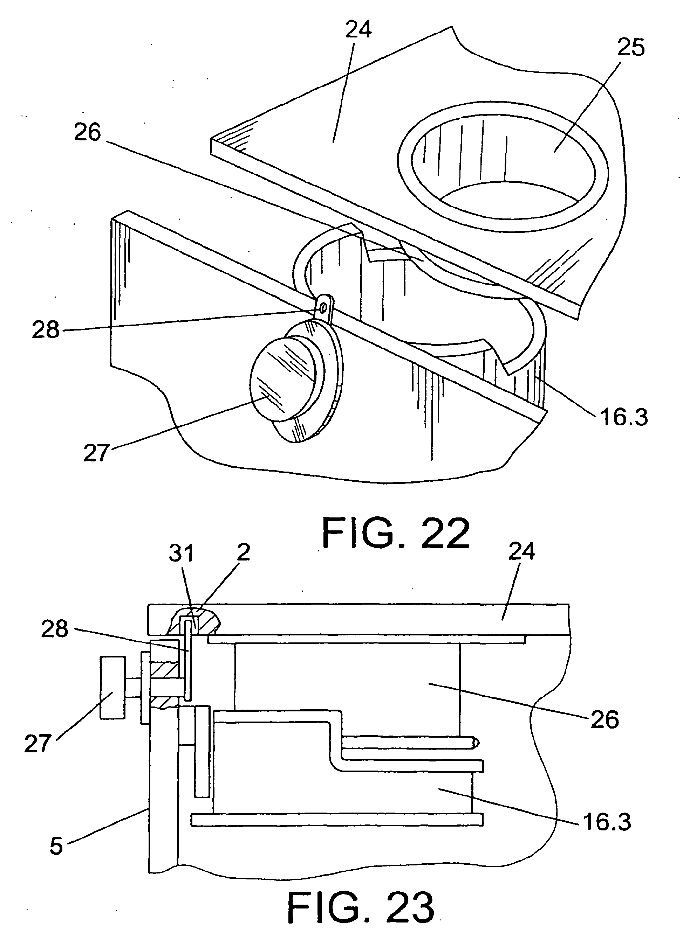

Figure 22. - It shows a view in perspective in which the removable tray and the front wall can be seen.
Figure 23. - It shows a side view of the removable tray facing the mouth of the organic waste collection bin with the fluke of the handle coupled to the removable tray, firmly attaching the front face to the aforesaid removable tray.

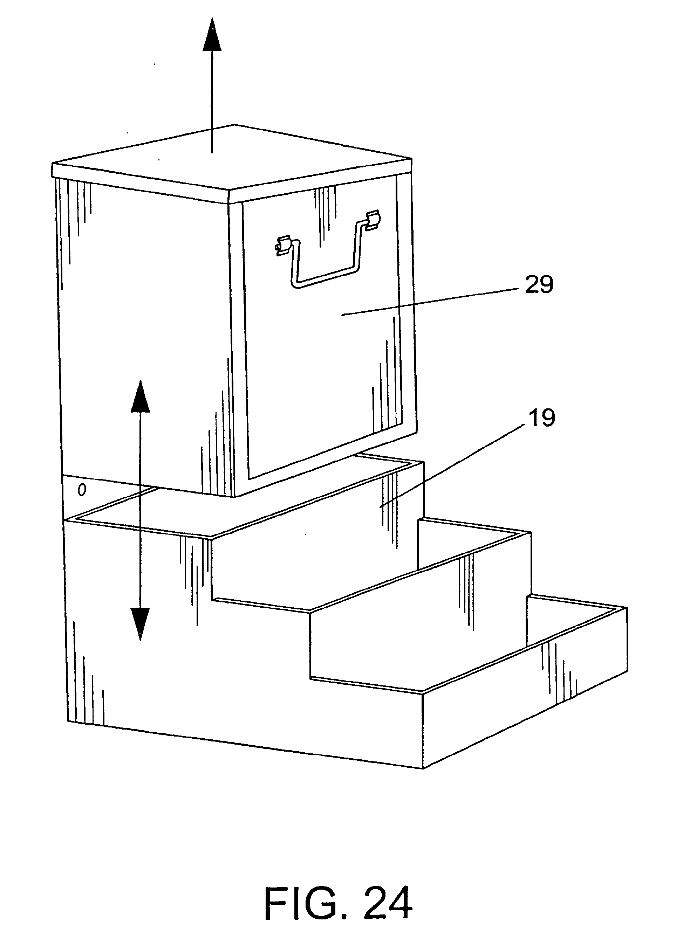

Figure 24. - It shows a view in perspective of the organic oil storage tank situated at a level above the tray supporting cleaning products.

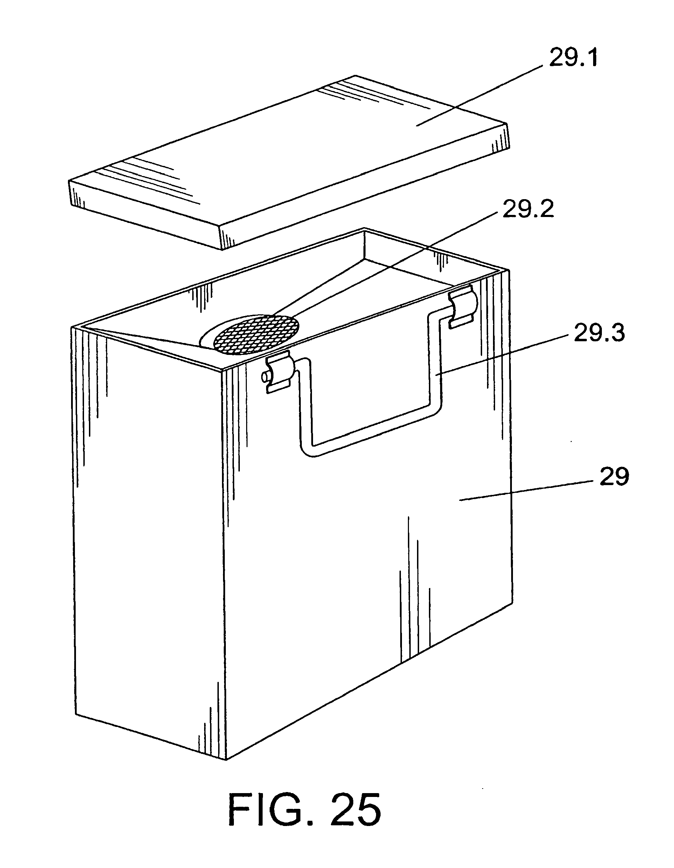

Figure 25. - It shows a view in perspective of the open oil storage tank.

### PREFERRED EMBODIMENT OF THE INVENTION

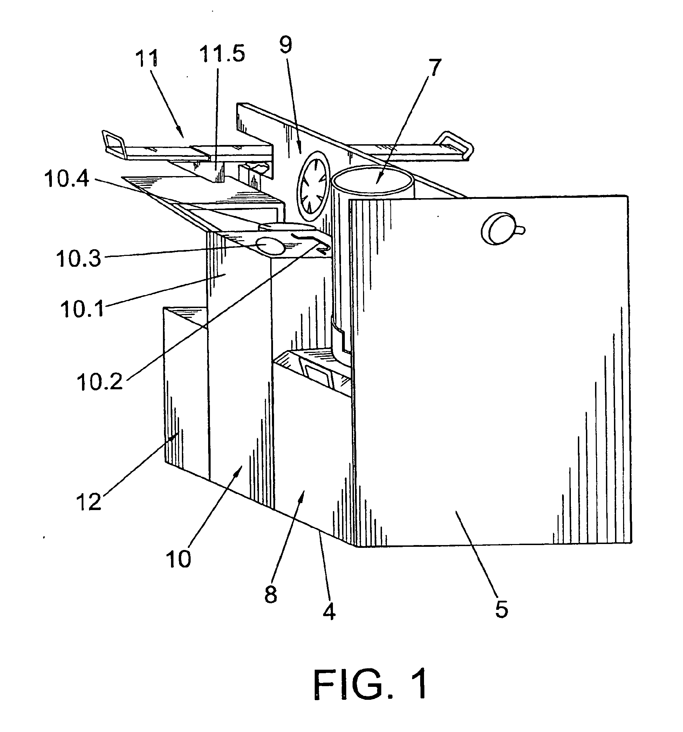

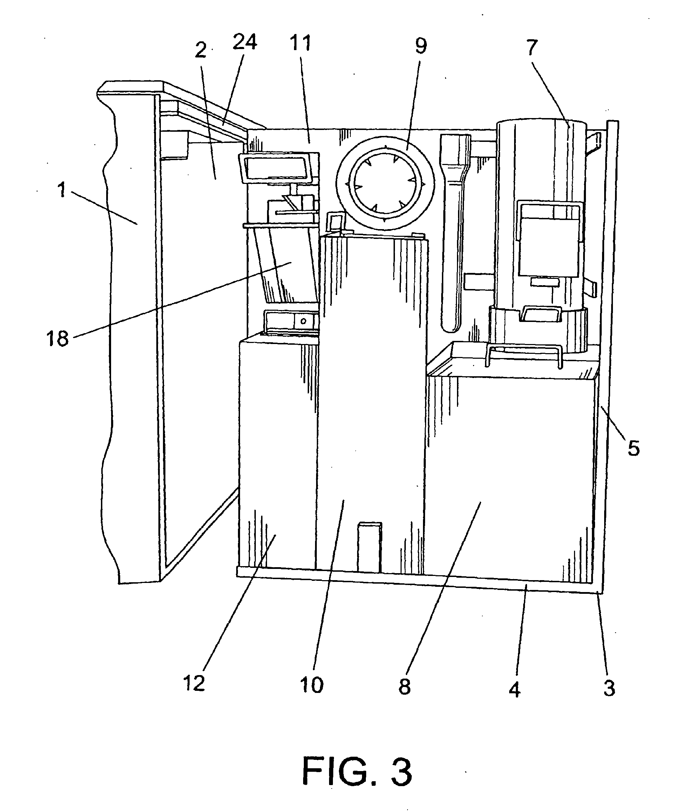

The module for classification, accumulation of waste and reduction in volume of recyclable waste comprises fundamentally a cabinet (1) with a copious internal cavity (2) wherein an L-shaped support structure (3) is introduced which comprises a base (4) fitted with wheels and a front face (5) with handle (27) for its extraction by rolling from the cabinet (1), there being on the support structure (3) an intermediate partition (6) which separates individual compartments in which are to be found, as can be appreciated in figures 1 and 3:
- a mechanism for breaking glass containers (7) and a collection bin for glass pieces (8),
- a mechanism for destroying plastic containers (9) and a collection bin for pieces of plastic (10),
- a mechanism for flattening metallic containers (11) and a collection bin for metallic remains (12).

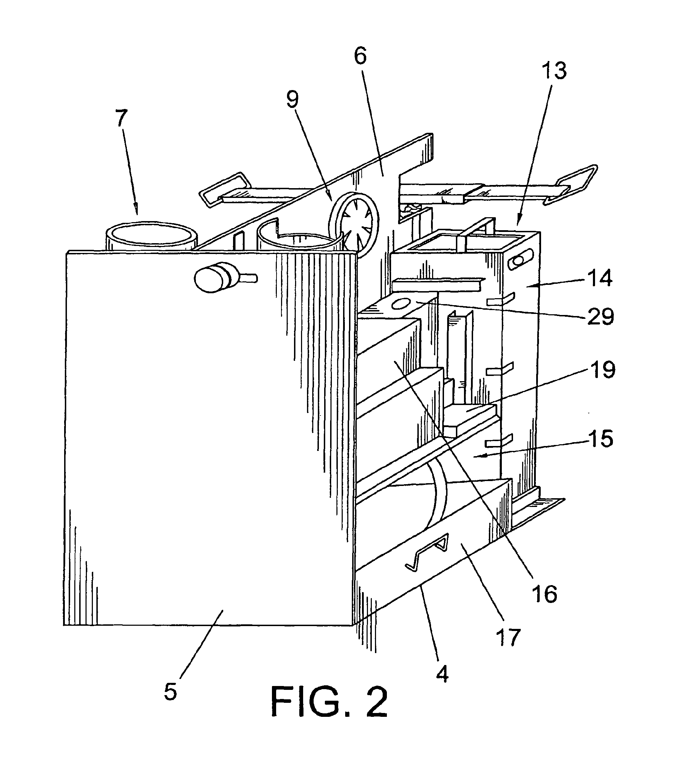

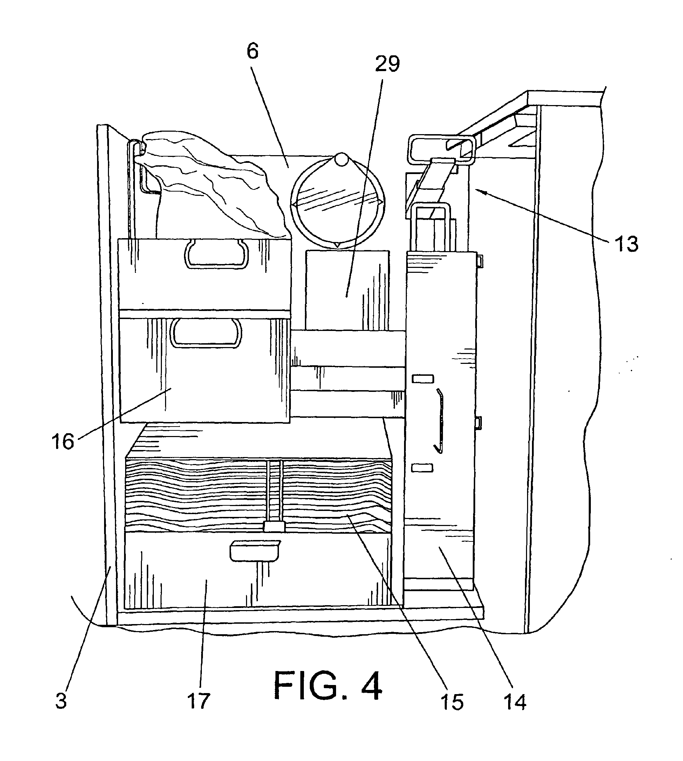

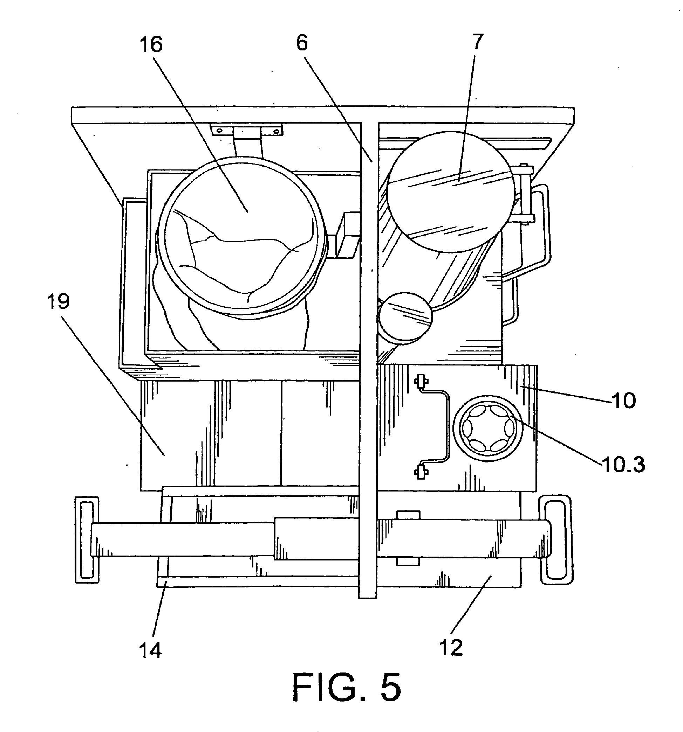

In the other compartment, as is represented in figures 2, 3, 4 and 5, are:
- a mechanism for pressing carton type containers (13) and a collection bin for remains of carton containers (14),
- a collection bin for paper and cardboard (15),
- a collection bin for organic waste (16),
- a storage tank of waste organic oils (29),
- a collection bin for miscellaneous disposable products (17),
- a collection bin for electric batteries (18), and
- a support tray for cleaning products (19).

The mechanism for breaking glass containers (7) comprises a tubular cylindrical body (7.1) in which the glass container is inserted after raising an upper cover (7.2) and a hammer (7.3) swivelled by manual action which is hinged at the top with respect to the external face of said cylindrical body (7.1) and which consists of an L-shaped body (7.4), on the longer side of which is a metal weight (7.5) with a handle (7.6) to allow it to fall and on the shorter side of which a sharp blade is defined which strikes against the glass container when it has penetrated through a slot (7.7) made in the cylindrical compartment (7.1) destroying the container which is already resting on, a lower fork (7.8) withdrawable through holes (7.10) drilled in the cylindrical compartment (7.1) and laterally on some semicircular ribs (7.9) located on the inside face of the cylindrical compartment (7.1).

The cylindrical body (7.1) is fixed to the intermediate partition (6) and on the front wall (5) perpendicular thereto with the intermediation of some supports and insulation (7.11) which diminish the noise of the impact when the container is broken.

The collection bin for glass pieces (8) incorporates a handle to facilitate the carrying thereof, when full, to an external container, and it has an ejection bar (30) to help in emptying the contents thereof.

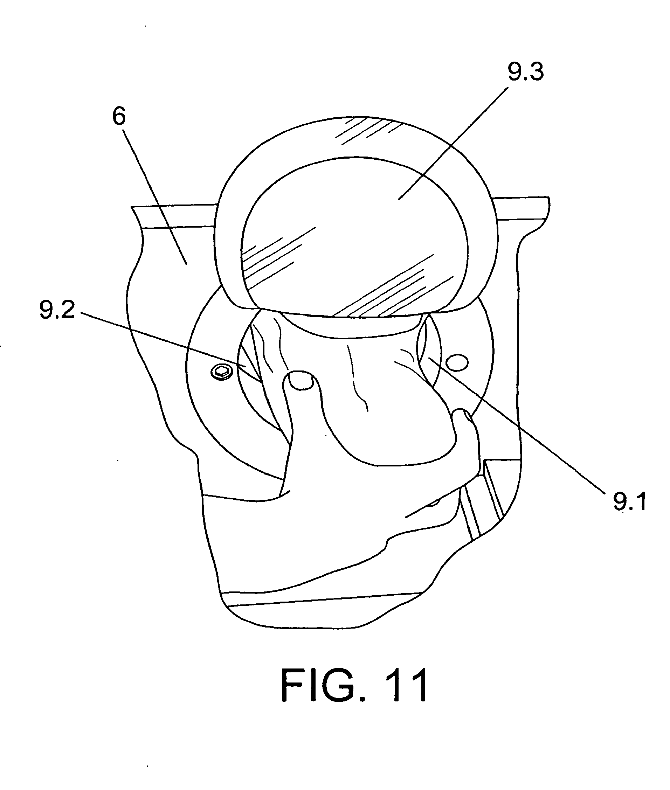

The mechanism for destroying plastic containers (9) comprises fundamentally independent circular rings (9.1) which cross and are fixed to the intermediate partition (6), there being located where these are joined some thin and sharp blades (9.2) positioned radially and in equidistant disposition against which the plastic container is pressed for the slicing thereof, as can be appreciated in figure 11, and also it has a practicable protective rubber cover (9.3) which impedes accidental access to the blades (9.2) and which serves to press the container physically in its final stage of destruction.

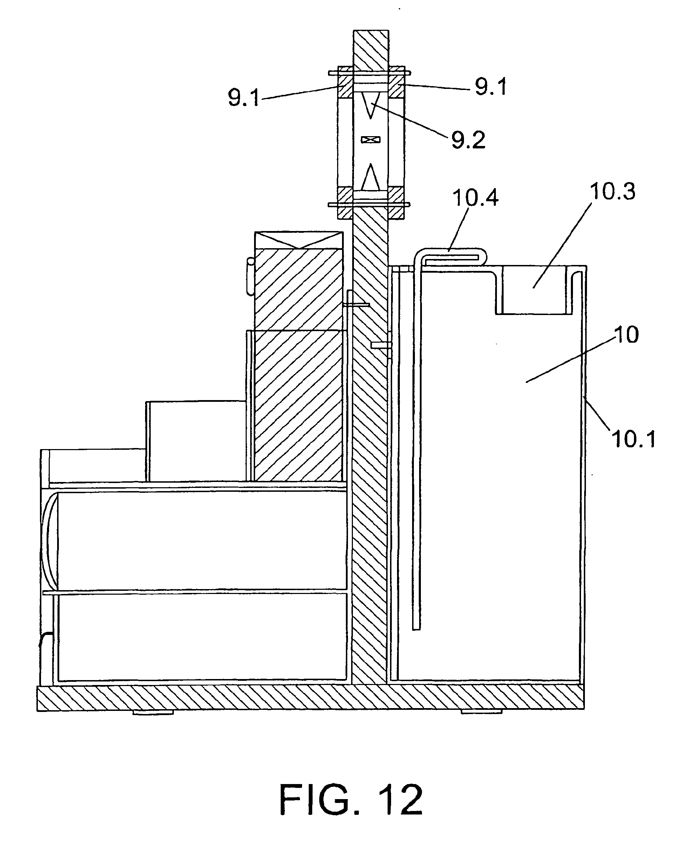

The collection bin for plastic pieces (10) is at a level immediately below the circular rings (9.1), as can be appreciated in figures 1 and 12, and reveals a body of parallelepipedic configuration (10.1) fitted with a handle (10.2) for the transport thereof and a loading mouth (10.3) in which the pieces of plastic are introduced with the help of a manual utensil, having in its base a folding cover for discharging the pieces of plastic which is facilitated with the help of an ejection bar (10.4).

The mechanism (11) for crushing metal containers comprises a lever (11.1) fitted with an intermediate arm (11.2) which swivels with respect to a hinge firmly joined to the intermediate partition (6) and has an arm (11.3) which displaces internally with respect to the intermediate arm (11.2) with the help of individual end handles (11.4), there being linked underneath to a front sector of the intermediate arm (11.2) a blade (11.5) which terminates on one of its ends in a fishplate (11.6) conceived for the successive flattening of the metal container which rests on a platform (11.7) firmly joined to the intermediate partition (6) by raising and lowering the lever (11.1) until it is reduced to a flat shape.

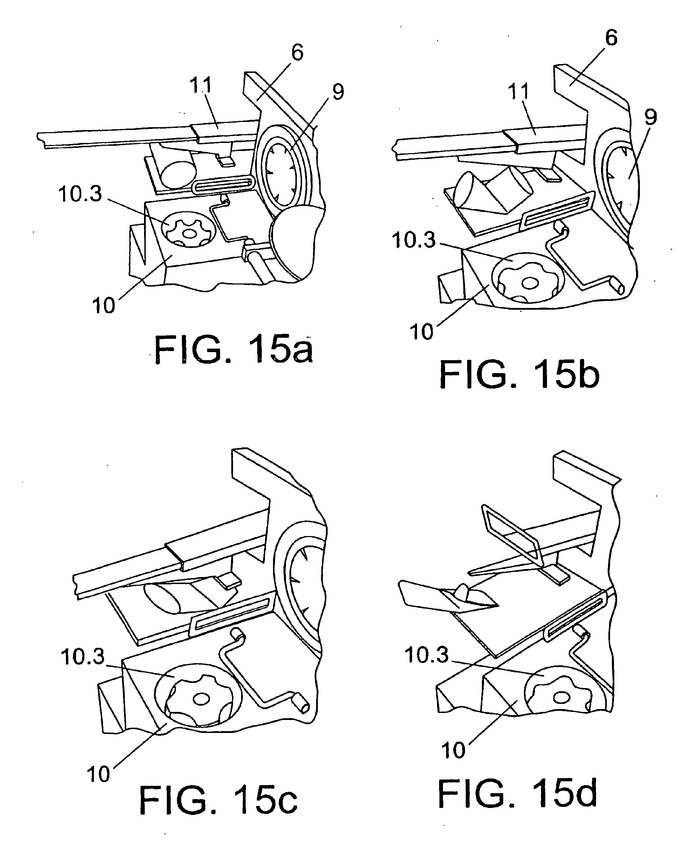

In figure 15 the different phases of flattening a metal container can be appreciated.

The collection bin for metallic remains (12) is immediately below the crushing mechanism (11) and consists of a bin in parallelepipedic form with a handle (12.1) and folding top cover (12.2) the emptying mouth of which coincides with the filling mouth.

The collection bin for electric batteries consists of a removable prismatic bin (18) located below the platform (11.7) with a form which coincides with that of the hole defined between the platform (11.7), the intermediate partition (6) and some inclined reinforcements (21) located between the platform (11.7) and the intermediate partition (6), and it is fitted with a lateral opening (23) for inserting the batteries whilst also serving as a handle to extract the bin (18).

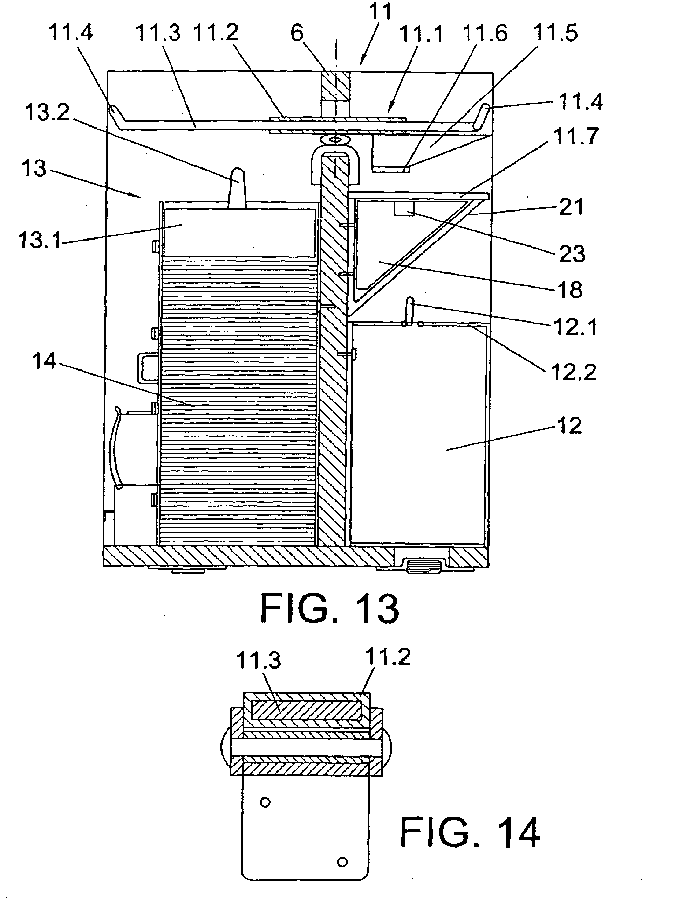

In figure 13 the pressing mechanism for carton type containers (13) is likewise observed which comprises the collection bin for carton containers (14) wherein said containers are stacked in column form, a piston presser (13.1), in parallelepipedic form which fits into the collection bin for remains of carton containers (14) and makes contact with the top container in the column, and which is fitted with an upper handle (13.2) on which the aforesaid lever (11.1) falls in its swivelling movement by means of its arm (11.3) pressing on the piston presser (13.1) and therefore on the containers and flattening them.

The collection bin for carton containers (14) consists of a detachable storage tank in parallelepipedic form of rectangular section opened through an upper and lower mouth constituted by articulated walls, which is closed by means of some moveable clips (14.1) and which has a removable fork (14.2) in the upper mouth to prevent the flattened carton containers from escaping during their transport, and also it has a handle (14.3) for the transport thereof.

The paper and cardboard collection bin (15) is generally parallelepipedic in form and consists of an upper cover (15.1) which swivels by means of a hinge and is open at the front and on the right side, as well as having a catch (15.2) on the front which also constitutes a handle for the carrying thereof to the corresponding container and it has a window (15.3) made in its left side which allows the contents thereof to be pushed by hand during the emptying process, it having been foreseen that it has a base (15.4) of greater length than the upper cover (15.1) for it to rest on the rim of the mouth of the street container with the object of facilitating its emptying.

The storage tank for disposable waste organic oils (29) has a parallelepipedic form, an upper receiving mouth which is covered by a lid (29.1), an interior filter (29.2), and is fitted with a handle (29.3) for its transport to the external container. For the emptying thereof, the lid (29.1) is removed, the storage tank is tipped up, and when empty replaced in the module.

The collection bin for organic waste (16) consists of a cubical bin (16.1) fitted with handles (16.2) and additionally with compartments (16.4) for housing miscellaneous cleaning products and it has a tubular and stepped top-mounted receiving mouth (16.3) connected to the intermediate partition (6) and to the front wall (5) on which the garbage bag is adapted, having foreseen that inside the cabinet (1) there is a removable tray (24) fitted with a wide circular opening (25) from underneath which runs a tubular portion (26) of diameter slightly less than that of the receiving mouth (16.3) into which it is inserted through its stepped formation.

The removable tray (24) has a groove (31) into which is inserted a fluke (28) firmly attached to the rotary handle (27) of the front wall (5) to link, if necessary, the movement of the removable tray (24) with that of the front wall (5), allowing the introduction of the waste via the circular opening (25) of the removable tray (24) into the garbage bag located in the collection bin for organic waste (16).

## Claims

1. Module for classification, accumulation of waste and reduction in volume of recyclable waste, module consisting of a cabinet (1) with a copious internal cavity (2) in which an L-shaped support structure (3) is introduced which comprises a base (4) fitted with wheels and a front face (5) with handle (27) for its extraction by wheeling from the cabinet (1), there being on the support structure (3) an intermediate partition (6) which separates individual compartments in which are:
- a mechanism for breaking glass containers (7) and a collection bin for glass pieces (8),
- a mechanism for destroying plastic containers (9) and a collection bin for pieces of plastic (10),
- a mechanism for crushing metallic containers (11) and a collection bin for metallic remains (12),
- a mechanism for pressing carton type containers (13) and a collection bin for remains of carton containers (14),
- a paper and cardboard collection bin (15),
- an organic waste collection bin (16),
- a storage tank for waste organic oils (29),
- a collection bin for miscellaneous disposable products (17),
- a collection bin for electric batteries (18), and
- a tray for supporting cleaning products (19).

2. - Module for classification, accumulation of waste and reduction in volume of recyclable waste according to claim 1 **characterized in that** the mechanism for breaking glass containers (7) consists of, a tubular cylindrical body (7.1) in which the glass container is inserted to be broken after folding up a top cover (7.2) and of, a hammer (7.3) swivelled by manual action which hinges at the top with respect to the external face of said cylindrical body (7.1) and which comprises an L-shaped body (7.4), on the longer side of which is a metallic weight (7.5) with a handle (7.6) to allow it to fall and on the shorter side of which is defined a sharp blade which strikes against the glass container when it has penetrated through a slot (7.7) made in the cylindrical compartment (7.1) destroying the container which is previously supported on, a lower fork (7.8) withdrawable through independent holes (7.10) drilled in the cylindrical compartment (7.1) and laterally on some semicircular ribs (7.9) located on the internal face of the cylindrical compartment (7.1), the glass, once broken, being directed into the collection bin for glass pieces (8).

3. - Module for classification, accumulation of waste and reduction in volume of recyclable waste according to claims 1 and 2 **characterized in that** the cylindrical body (7.1) is fixed to the intermediate partition (6) and on the front wall (5) perpendicular to the latter with intermediation of some supports and insulation (7.11) which diminish the impact noise at the time of breaking the container.

4. - Module for classification, accumulation of waste and reduction in volume of recyclable waste according to claims 1 and 2 **characterized in that** the collection bin for glass pieces (8) incorporates a handle to facilitate the carrying thereof, when full, to an external container, and it has an ejection bar (30) to help in the emptying of the contents thereof.

5. - Module for classification, accumulation of waste and reduction in volume of recyclable waste according to claim 1 **characterized in that** the mechanism for destroying plastic containers (9) consists fundamentally of independent circular rings (9.1) which traverse and are fixed to the intermediate partition (6), being located where these join some thin and sharp blades (9.2) positioned radially and in equidistant disposition against which the plastic container is pressed for its destruction, and also it has a practicable protective rubber cover (9.3) which impedes the accidental access to the blades (9.2) and which serves to push the container manually in its final stage of destruction.

6. - Module for classification, accumulation of waste and reduction in volume of recyclable waste according to claims 1 and 5 **characterized in that** the collection bin for pieces of plastic (10) is at a level immediately underneath the circular rings (9.1), and has a body of parallelepipedic configuration (10.1) fitted with a handle (10.2) for its transport and a loading mouth (10.3) through which the pieces of plastic are inserted with the help of a manual utensil, incorporating in its base a folding cover for discharging the plastic containers which is facilitated with the help of an ejection bar (10.4).

7. - Module for classification, accumulation of waste and reduction in volume of recyclable waste according to claim 1 **characterized in that** the crushing mechanism (11) for metallic containers consists of a lever (11.1) fitted with an intermediate arm (11.2) which swivels with respect to a hinge firmly joined to the intermediate partition (6) and has an arm (11.3) which displaces internally with respect to the intermediate arm (11.2) with the help of individual end handles (11.4), a blade (11.5) being linked underneath to a front sector of the intermediate arm (11.2), which blade is terminated on one of its ends in a fishplate (11.6) designed for the successive crushing of the metallic container which rests on a platform (11.7) firmly joined to the intermediate partition (6) by raising and lowering the lever (11.1) until it is reduced to a planar form.

8. - Module for classification, accumulation of waste and reduction in volume of recyclable waste according to claims 1 and 7 **characterized in that** the collection bin for metallic remains (12) is immediately below the crushing mechanism (11) and consists of a deposit in parallelepipedic form with handle (12.1) and folding upper cover (12.2), the emptying mouth of which coincides with the filling mouth.

9. - Module for classification, accumulation of waste and reduction in volume of recyclable waste according to claim 1 **characterized in that** the collection bin for electric batteries consists of a removable prismatic bin (18) located below the platform (11.7) with a form coincident with that of the space defined between the platform (11.7), the intermediate partition (6) and some inclined reinforcements (21) located between the platform (11.7) and the intermediate partition (6), and it is fitted with a side opening (23) for inserting the batteries at the same time as it serves as a handle to extract the bin (18).

10. - Module for classification, accumulation of waste and reduction in volume of recyclable waste according to claim 7 **characterized in that** the mechanism for pressing carton type containers (13) comprises the collection bin for carton containers (14) in which said containers are stacked in column form, a piston presser (13.1), in parallelepipedic form which fits in the collection bin for carton container remains (14) and makes contact with the top container in the column, and which is fitted with an upper handle (13.2) to which the lever (11.1) is applied in its swivelling movement by means of its arm (11.3) pressing on the piston presser (13.1) and therefore on the containers flattening them.

11. - Module for classification, accumulation of waste and reduction in volume of recyclable waste according to claims 1 and 10 **characterized in that** the collection bin for carton containers (14) consists of a dismountable bin in parallelepipedic form of rectangular section open through an upper and a lower mouth constituted by hinged walls which is closed by means of some sliding clips (14.1) and which has a removable fork (14.2) in the upper mouth to prevent the flattened carton containers escaping during their transport, and also it has a handle (14.3) for its transport.

12. - Module for classification, accumulation of waste and reduction in volume of recyclable waste according to claim 1 **characterized in that** the paper and cardboard collection bin (15) is in general form parallelepipedic and consists of an upper cover (15.1) which swivels by means of a hinge and is open at the front and on the right side, and also it has a catch (15.2) on its front which likewise constitutes a handle for its transport to the corresponding container and it has a window (15.3) made in its left side which allows the content to be pushed manually during the discharge thereof, it having been foreseen that it has a base (15.4) of greater length than the upper cover (15.1) for its support on the rim of the mouth of the street container with the object of facilitating the emptying process.

13. - Module for classification, accumulation of waste and reduction in volume of recyclable waste according to claim 1 **characterized in that** the storage tank for disposable waste organic oils (29) has a parallelepipedic form, an upper receiving mouth which is covered by a lid (29.1), an interior filter (29.2), and is fitted with a handle (29.3) for the transport thereof.

14. - Module for classification, accumulation of waste and reduction in volume of recyclable waste according to claim 1 **characterized in that** the collection bin for organic waste (16) consists of a cubical bin (16.1) fitted with handles (16.2) and additionally with compartments (16.4) for holding miscellaneous cleaning products and has a top-mounted tubular and stepped receiving mouth (16.3) connected to the intermediate partition (6) and to the front wall (5) on which the garbage bag is fitted, it having been foreseen that inside the cabinet (1) there is a removable tray (24) provided with a wide circular opening (25) from which runs underneath a tubular portion (26) of slightly less diameter than that of the receiving mouth (16.3) into which it is inserted through its gradation.

15. - Module for classification, accumulation of waste and reduction in volume of recyclable waste according to claims 1 and 14 **characterized in that** the removable tray (24) has a groove (31) into which is introduced a fluke (28) firmly joined to the rotary handle (27) of the front wall (5) to link the movement of the removable tray (24) with that of the front wall (5), allowing the introduction of the waste through the circular opening (25) of the removable tray (24) into the garbage bag located in the collection bin for organic waste (16).

## Patentansprüche

1. Modul zur Klassifikation, Sammlung und Volumenreduzierung von wiederverwertbarem Abfall, wobei das Modul aus einem Gehäuse (1) mit einem ausgedehnten inneren Hohlraum (2) besteht, in den eine L-förmige Trägerstruktur (3) eingeführt ist, die eine mit Rädern ausgestattete Basis (4) und eine Stirnseite (5) mit einem Griffstück (27) umfasst, um sie durch Rollen aus dem Gehäuse (1) herauszuziehen, wobei sich an der Trägerstruktur (3) eine Zwischentrennwand (6) befindet, die einzelne Abteilungen abtrennt, in denen sich befinden:
- eine Vorrichtung zum Zerbrechen von Glasbehältern (7) und ein Sammelbehälter für Glasscherben (8),
- eine Vorrichtung zum Zerstören von Kunststoffbehältern (9) und ein Sammelbehälter für Kunststoffstücke (10),
- eine Vorrichtung zum Zerkleinern von Metallbehältern (11) und ein Sammelbehälter für Metallüberreste (12),
- eine Vorrichtung zum Pressen von kartonartigen Behältern (13) und ein Sammelbehälter für Überreste von Kartonbehältern (14),
- ein Papier- und Pappe-Sammelbehälter (15),
- ein Sammelbehälter (16) für organische Abfälle,
- ein Lagertank für organische Abfallöle (29),
- ein Sammelbehälter für diverse Einwegprodukte (17),
- ein Sammelbehälter für elektrische Batterien (18), und
- ein Fach, um Reinigungsprodukte (19) zu Verfügung zu stellen.

2. Modul zur Klassifikation, Sammlung und Volumenreduzierung von wiederverwertbarem Abfall gemäß Anspruch 1, **dadurch gekennzeichnet, dass** die Vorrichtung zum Zerbrechen von Glasbehältern (7) aus einem röhrenförmigen, zylindrischen Körper (7.1) besteht, in den der Glasbehälter, um zerbrochen zu werden, eingesetzt wird, nachdem eine obere Abdeckung (7.2) aufgeklappt wurde, und aus einem Hammer (7.3), der durch manuelle Bewegung geschwenkt wird, die sich um das Oberteil, bezogen auf die äußere Oberfläche des zylindrischen Körpers (7.1) scharnierartig dreht, und welche einen L-förmigen Körper (7.4) umfasst, an dessen längerer Seite sich ein Metallgewicht (7.5) mit einem Griffstück (7.6) befindet, um ihm zu ermöglichen zu fallen und an dessen kürzerer Seite eine scharfe Schneide definiert ist, die gegen den Glasbehälter schlägt, wenn sie durch einen Schlitz (7.7), der in das zylindrische Gehäuse (7.1) eingebracht wurde, hindurchgetreten ist, was den Glasbehälter zerstört, der zuvor von einer unteren Gabel (7.8) getragen wurde, die durch unabhängige Löcher (7.10), die in das zylindrische Gehäuse (7.1) gebohrt wurden, zurückgezogen werden kann, und seitlich an einigen halbrunden Rippen (7.9), die sich an der inneren Oberfläche des zylindrischen Gehäuses (7.1) befinden, das zerbrochene Glas in den Sammelbehälter für Glasscherben (8) geleitet wird.

3. Modul zur Klassifikation, Sammlung und Volumenreduzierung von wiederverwertbarem Abfall gemäß den Ansprüchen 1 und 2, **dadurch gekennzeichnet, dass** der zylindrische Körper (7.1) an der Zwischentrennwand (6) und an der Vorderwand (5) senkrecht zu letzterer befestigt ist durch Vermittlung von einigen Trägern und Isolationen (7.11), die das Aufprallgeräusch beim Zerbrechen des Behälters verringern.

4. Modul zur Klassifikation, Sammlung und Volumenreduzierung von wiederverwertbarem Abfall gemäß den Ansprüchen 1 und 2, **dadurch gekennzeichnet, dass** der Sammelbehälter für Glasscherben (8) ein Griffstück einschließt, um, wenn er voll ist, das Tragen zu einem externen Behälter zu erleichtern, und eine Auswurfstange (30) aufweist, die bei der Entleerung seines Inhalt behilflich ist.

5. Modul zur Klassifikation, Sammlung und Volumenreduzierung von wiederverwertbarem Abfall gemäß Anspruch 1, **dadurch gekennzeichnet, dass** die Vorrichtung zum Zerstören von Kunststoffbehältern (9) im Wesentlichen aus unabhängigen kreisförmigen Ringen (9.1) besteht, die sich verschieben und an der Zwischentrennwand (6) befestigt sind, und sich dort befinden, wo diese sich mit einigen dünnen und scharfen Schneiden (9.2) verbinden, die radiär und in gleichmäßig beabstandeter Anordnung positioniert sind, gegen die der Kunststoffbehälter zu seiner Zerstörung gedrückt wird, und sie weist auch eine zweckmäßige Gummischutzabdeckung (9.3) auf, die den versehentlichen Zugang zu den Schneiden (9.2.) verhindert und welche dazu dient, den Behälter manuell im Endstadium seiner Zerstörung zu drücken.

6. Modul zur Klassifikation, Sammlung und Volumenreduzierung von wiederverwertbarem Abfall gemäß den Ansprüchen 1 und 5, **dadurch gekennzeichnet, dass** der Sammelbehälter für Kunststoffstücke (10) sich auf einem Niveau unmittelbar unterhalb der kreisförmigen Ringe (9.1) befindet und einen Körper von quaderförmiger Bauform (10.1) aufweist, der mit einem Griffstück (10.2) zu seinem Transport ausgestattet ist, und einer Beladeöffnung (10.3), durch die die Kunststoffstücke mit Hilfe eines manuellen Hilfsmittels eingeführt werden, und eine Klappabdeckung einschließend, um die Kunststoffbehälter zu entladen, was mit Hilfe einer Auswurfstange (10.4) vereinfacht wird.

7. Modul zur Klassifikation, Sammlung und Volumenreduzierung von wiederverwertbarem Abfall gemäß Anspruch 1, **dadurch gekennzeichnet, dass** die Zerkleinerungsvorrichtung (11) für Metallbehälter aus einem Hebel (11.1) besteht, der mit einem Zwischenarm (11.2), der in Bezug auf ein Scharnier, das fest mit der Zwischentrennwand (6) verbunden ist, schwingt und einen Arm (11.3) aufweist, der eine Schneide (11.5) intern in Bezug auf den Zwischenarm (11.2) mit Hilfe von einzelnen Endgriffstücken (11.4)verstellt, die unterhalb mit einem Vorderbereich des Zwischenarms (11.2.) verbunden ist, dessen Schneide an einem ihrer Ende in einem Stoßblech (11.6) ausläuft, das zum schrittweisen Zerkleinern des Metallbehälters gedacht ist, der auf einer Plattform (11.7) liegt, die fest mit der Zwischentrennwand (6) verbunden ist, durch Anheben und Senken des Hebels (11.1), bis er auf eine flache Form reduziert ist.

8. Modul zur Klassifikation, Sammlung und Volumenreduzierung von wiederverwertbarem Abfall gemäß den Ansprüchen 1 und 7, **dadurch gekennzeichnet, dass** der Sammelbehälter für metallische Überreste (12) sich unmittelbar unter der Zerkleinerungsvorrichtung (11) befindet und aus einer Ablage in quaderförmiger Form mit einem Griffstück (12.1) und oberen Klappabdeckung (12.2) besteht, deren Entleerungsöffnung mit der Befüllungsöffnung zusammenfällt.

9. Modul zur Klassifikation, Sammlung und Volumenreduzierung von wiederverwertbarem Abfall gemäß Anspruch 1, **dadurch gekennzeichnet, dass** der Sammelbehälter für elektrische Batterien aus einem abnehmbaren prismatischen Gefäß (18) besteht, welches sich unter der Plattform (11.7) befindet mit einer Form, die mit der des Zwischenraums, der zwischen der Plattform (11.7), der Zwischentrennwand (6) und einigen erhöhten Verstärkungen (21), die sich zwischen der Plattform (11.7) und der Zwischenrennwand (6) befinden, definiert wird, übereinstimmt, und es ist mit einer Seitenöffnung (23) versehen, um gleichzeitig die Batterien und Ähnliches einzuführen und als Griffstück zu dienen, um das Gefäß (18) herauszunehmen.

10. Modul zur Klassifikation, Sammlung und Volumenreduzierung von wiederverwertbarem Abfall gemäß Anspruch 7, **dadurch gekennzeichnet, dass** die Vorrichtung zum Pressen von kartonartigen Behältern (13) den Sammelbehälter für Kartonbehälter (14), in dem die Behälter in Säulenform ineinander gesteckt werden, eine Kolbenpresse (13.1) in quaderförmiger Form, die in den Sammelbehälter für Kartonbehälterüberreste (14) passt, und in Kontakt mit dem oberen Behälter in der Säule tritt, umfasst, und die mit einem oberen Griffstück (13.2) versehen ist, an dem ein Hebel (11.1) in seinem Drehmoment durch Mittel seines Arms (11.3) auf die Kolbenpresse (13.1) und deshalb auf die Behälter drücken, angebracht ist und sie **dadurch** flach drückt.

11. Modul zur Klassifikation, Sammlung und Volumenreduzierung von wiederverwertbarem Abfall gemäß den Ansprüchen 1 und 10, **dadurch gekennzeichnet, dass** der Sammelbehälter für Kartonbehälter (14) aus einem abmontierbaren Abfallbehälter in quaderförmiger Form von rechteckigem Querschnitt besteht, offen durch eine obere und eine untere Öffnung, die durch angelenkte Wände, die durch einige Gleitclips (14.1) geschlossen werden, gebildet werden und die eine entfernbare Gabel (14.2) in der oberen Öffnung aufweist, um zu verhindern, dass flachgedrückte Kartons während ihres Transports entweichen und der auch ein Griffstück (14.3) für seinen Transport aufweist.

12. Modul zur Klassifikation, Sammlung und Volumenreduzierung von wiederverwertbarem Abfall gemäß Anspruch 1, **dadurch gekennzeichnet, dass** der Papier- und Pappe-Sammelbehälter (15) im Allgemeinen von quaderförmiger Form ist und aus einer oberen Abdeckung (15.1) besteht, die mittels eines Scharniers schwingt und an der Vorderseite und an der rechten Seite offen ist, und auch einen Arretierung (15.2) an seiner Vorderseite aufweist, die ebenso ein Griffstück für seinen Transport zum entsprechenden Behälter bildet und ein Fenster (15.3) aufweist, das in seiner rechten Seite eingebracht ist, das es erlaubt, den Inhalt während dessen Entladung manuell zu drücken; es wurde vorgesehen, dass er eine Basis (15.4) von größerer Länge als die obere Abdeckung (15.1) für das Tragen am Rand der Öffnung des Straßenbehälters mit einem Objekt, das den Entleerungsprozess vereinfacht, aufweist.

13. Modul zur Klassifikation, Sammlung und Volumenreduzierung von wiederverwertbarem Abfall gemäß Anspruch 1, **dadurch gekennzeichnet, dass** der Lagertank für zum Wegwerfen gedachte organische Abfallöle (29) eine quaderförmige Form, eine obere Aufnahmeöffnung, die durch einen Deckel (29.1) abgedeckt ist, einen Innenfilter (29.2) aufweist und mit einem Griffstück (29.3) für dessen Transport ausgestattet ist.

14. Modul zur Klassifikation, Sammlung und Volumenreduzierung von wiederverwertbarem Abfall gemäß Anspruch 1, **dadurch gekennzeichnet, dass** der Sammelbehälter für organischen Abfall (16) aus einem würfelförmigen Abfallbehälter (16.1) besteht, der mit Griffstücken (16.2) und zusätzlich mit Abteilungen (16.4) zum Halten verschiedener Reinigungsprodukte ausgestattet ist und eine an der Spitze montierte röhrenförmige und gestufte Aufnahmeöffnung (16.3), die mit der Zwischentrennwand (6) und der Vorderwand (5), an die der Müllsack angebracht ist, verbunden ist; es ist vorgesehen dass im Inneren des Gehäuses (1) ein entfernbares Fach (24), das mit einer weiten kreisförmigen Öffnung (25) ausgestattet ist, von der aus unterhalb ein röhrenförmiger Abschnitt (26) mit geringfügig geringerem Durchmesser als der der Aufnahmeöffnung (16.3) verläuft, in die sie durch ihre Abstufung gesetzt ist.

15. Modul zur Klassifikation, Sammlung und Volumenreduzierung von wiederverwertbarem Abfall gemäß den Ansprüchen 1 und 14, **dadurch gekennzeichnet, dass** das entfernbare Fach (24) eine Rille (31) aufweist, in die ein Widerhaken (28) eingeführt wird, der fest mit dem drehbaren Griff (27) der Vorderwand (5) verbunden ist, um die Bewegung des entfernbaren Fachs (24) mit der der Vorderwand (5) zu verbinden, was das Einführen des Abfalls durch die kreisförmige Öffnung (25) des entfernbaren Fachs (24) in den im Sammelbehälter für organischen Abfall (16) befindlichen Müllsack ermöglicht.

## Revendications

1. Module de classification, d'emmagasinage et de réduction du volume des déchets recyclables, le module consistant en une armoire (1), ayant une grande cavité interne (2) dans laquelle est introduite une structure de support en forme de L (3) qui comprend une base (4) munie de roues et une face avant (5) munie d'une poignée (27) pour son extraction de l'armoire (1) par roulement, une cloison intermédiaire (6) se trouvant sur la structure de support (3) et destinée à séparer les compartiments individuels, parmi lesquels se trouvent :
- un mécanisme pour briser des conteneurs en verre (7) et une benne de collecte des bris de verre (8),
- un mécanisme de destruction de conteneurs en plastique (9) et une benne de collecte des morceaux de plastique (10),
- un mécanisme de concassage de conteneurs métalliques (11) et une benne de collecte des résidus métalliques (12),
- un mécanisme de pressage de conteneurs de type boîtes en carton (13) et une benne de collecte des résidus de conteneurs de type carton (14),
- une benne de collecte des papiers et cartons (15),
- une benne de collecte des déchets organiques (16),
- un réservoir de stockage pour huiles organiques usagées (29),
- une benne de collecte pour divers produits jetables (17),
- une benne de collecte pour batteries électriques (18), et
- un plateau de support des produits de nettoyage (19).

2. Module de classification, d'emmagasinage et de réduction du volume des déchets recyclables selon la revendication 1, **caractérisé en ce que** le mécanisme pour briser des conteneurs en verre (7) consiste en un corps cylindrique tubulaire (7.1), dans lequel le conteneur en verre est inséré pour être cassé après avoir rabattu un couvercle supérieur (7.2), et en un marteau (7.3) basculé grâce à une action manuelle, qui est articulé au niveau de la partie supérieure par rapport à la face externe dudit corps cylindrique (7.1) et qui comprend un corps en forme de L (7.4), sur le plus long côté duquel se trouve un poids métallique (7.5) avec une poignée (7.6) pour lui permettre de tomber, et sur le plus court côté duquel est définie une lame aiguisée qui heurte le conteneur en verre lorsqu'elle pénètre au travers d'une fente (7.7) ménagée dans le compartiment cylindrique (7.1), détruisant le conteneur qui était préalablement supporté sur une fourche inférieure (7.8) rétractable au travers d'orifices indépendants (7.10) percés dans le compartiment cylindrique (7.1) et latéralement sur des nervures semi-circulaires (7.9) situées sur la face interne du compartiment cylindrique (7.1), le verre, une fois cassé, étant dirigé vers la benne de collecte des bris de verre (8).

3. Module de classification, d'emmagasinage et de réduction du volume des déchets recyclables selon les revendications 1 et 2, **caractérisé en ce que** le corps cylindrique (7.1) est fixé sur la cloison intermédiaire (6) et sur la paroi avant (5) perpendiculaire à cette dernière par l'intermédiaire de quelques supports et d'une isolation (7.11) qui réduit le bruit d'impact lorsque le conteneur est brisé.

4. Module de classification, d'emmagasinage et de réduction du volume des déchets recyclables selon les revendications 1 et 2, **caractérisé en ce que** la benne de collecte des bris de verre (8) intègre une poignée pour faciliter son acheminement, lorsqu'elle est pleine, vers un conteneur externe, et **en ce qu'**elle présente une barre d'éjection (30) pour faciliter le vidage de son contenu.

5. Module de classification, d'emmagasinage et de réduction du volume des déchets recyclables selon la revendication 1, **caractérisé en ce que** le mécanisme de destruction des conteneurs en plastique (9) consiste principalement en des anneaux circulaires indépendants (9.1) qui traversent et sont fixés à la cloison intermédiaire (6), situés à l'endroit où ceux-ci rejoignent certaines lames minces et aiguisées (9.2) positionnées radialement et selon une disposition équidistante et contre lesquelles le conteneur en plastique est appuyé en vue de sa destruction, et **en ce qu'**il possède également un couvercle en caoutchouc protecteur praticable (9.3) qui empêche l'accès accidentel aux lames (9.2) et qui sert à pousser le conteneur manuellement lors de sa dernière étape de destruction.

6. Module de classification, d'emmagasinage et de réduction du volume des déchets recyclables selon les revendications 1 et 5, **caractérisé en ce que** la benne de collecte des morceaux de plastique (10) se situe à un niveau immédiatement en dessous des anneaux circulaires (9.1) et a un corps de configuration parallélépipédique (10.1), muni d'une poignée (10.2) pour son transport et d'une ouverture de chargement (10.3), à travers laquelle les conteneurs en plastique sont insérés à l'aide d'un ustensile manuel, intégrant dans sa base un couvercle rabattable permettant de décharger les pièces en plastique, ce qui est facilité par une barre d'éjection (10.4).

7. Module de classification, d'emmagasinage et de réduction du volume des déchets recyclables selon la revendication 1, **caractérisé en ce que** le mécanisme de concassage (11) des conteneurs métalliques consiste en un levier (11.1) muni d'un bras intermédiaire (11.2) qui bascule par rapport à une charnière fermement liée à la cloison intermédiaire (6) et a un bras (11.3) qui déplace, à l'intérieur par rapport au bras intermédiaire (11.2) et à l'aide de poignées d'extrémité individuelles (11.4), une lame (11.5) reliée en dessous à un secteur avant du bras intermédiaire (11.2), ladite lame se terminant à l'une de ses extrémités par un gousset (11.6), conçu pour le concassage successif du conteneur métallique qui repose sur une plate-forme (11.7) fermement liée à la cloison intermédiaire (6) en élevant et en abaissant le levier (11.1) jusqu'à ce qu'il soit aplati.

8. Module de classification, d'emmagasinage et de réduction du volume des déchets recyclables selon les revendications 1 et 7, **caractérisé en ce que** la benne de collecte des résidus métalliques (12) se situe immédiatement en dessous du mécanisme de concassage (11) et consiste en un dépôt de forme parallélépipédique ayant une poignée (12.1) et en un couvercle supérieur rabattable (12.2), dont l'ouverture d'évacuation coïncide avec l'ouverture de remplissage.

9. Module de classification, d'emmagasinage et de réduction du volume des déchets recyclables selon la revendication 1, **caractérisé en ce que** la benne de collecte des batteries électriques consiste en une benne prismatique amovible (18) située en dessous de la plate-forme (11.7), ayant une forme coïncidant avec celle de l'espace défini entre la plate-forme (11.7), la cloison intermédiaire (6) et certains renforts inclinés (21) situés entre la plate-forme (11.7) et la cloison intermédiaire (6), et est munie d'une ouverture latérale (23) qui permet d'insérer les batteries et qui sert également de poignée pour extraire la benne (18).

10. Module de classification, d'emmagasinage et de réduction du volume des déchets recyclables selon la revendication 7, **caractérisé en ce que** le mécanisme de pressage des conteneurs de type carton (13) comprend la benne de collecte des conteneurs de type carton (14) dans laquelle lesdits conteneurs sont empilés en colonne, un presseur à piston (13.1) ayant une forme parallélépipédique qui s'ajuste dans la benne de collecte des résidus de conteneurs de type carton (14) et entre en contact avec le conteneur supérieur dans la colonne, et qui est muni d'une poignée supérieure (13.2) sur laquelle est appliqué le levier (11.1) dans son mouvement de basculement au moyen de son bras (11.3), appuyant sur le presseur à piston (13.1) et donc sur les conteneurs, en les aplatissant.

11. Module de classification, d'emmagasinage et de réduction du volume des déchets recyclables selon les revendications 1 et 10, **caractérisé en ce que** la benne de collecte des conteneurs de type carton (14) consiste en une benne démontable de forme parallélépipédique et de section rectangulaire, ouverte sur des ouvertures supérieure et inférieure constituées de parois à charnière, qui est fermée au moyen d'attaches coulissantes (14.1) et qui a une fourche amovible (14.2) dans l'ouverture supérieure pour empêcher que les conteneurs de type carton aplatis ne s'échappent lors du transport, et a également une poignée (14.3) pour son transport.

12. Module de classification, d'emmagasinage et de réduction du volume des déchets recyclables selon la revendication 1, **caractérisé en ce que** la benne de collecte des papiers et des cartons (15) présente une forme globalement parallélépipédique et consiste en un couvercle supérieur (15.1) qui bascule au moyen d'une charnière, qui est ouvert au niveau du côté avant et du côté droit et qui possède également un doigt d'entraînement (15.2) sur l'avant qui constitue également une poignée pour son transport vers le conteneur correspondant, et a une fenêtre (15.3) formée sur son côté gauche, qui permet au contenu d'être poussé manuellement lors de son déchargement, il est prévu qu'elle ait une base (15.4) d'une longueur supérieure à celle du couvercle supérieur (15.1) pour son support sur le bord de l'ouverture du conteneur public de manière à faciliter le processus de vidage.

13. Module de classification, d'emmagasinage et de réduction du volume de déchets recyclables selon la revendication 1, **caractérisé en ce que** le réservoir de stockage des huiles organiques usagées jetables (29) a une forme parallélépipédique, une ouverture de réception supérieure qui est couverte par un couvercle (29.1), un filtre intérieur (29.2), et est muni d'une poignée (29.3) pour le transport de celui-ci.

14. Module de classification, d'emmagasinage et de réduction du volume des déchets recyclables selon la revendication 1, **caractérisé en ce que** la benne de collecte des déchets organiques (16) consiste en une benne cubique (16.1) munie de poignées (16.2) et en outre de compartiments (16.4) permettant de maintenir les produits de nettoyage divers, et a une ouverture de réception étagée et tubulaire montée sur le dessus (16.3) et raccordée à la cloison intermédiaire (6) ainsi qu'à la paroi avant (5), sur laquelle est ajusté le sac poubelle, il est prévu qu'à l'intérieur de l'armoire (1) se situe un plateau amovible (24) muni d'une ouverture circulaire large (25), sous laquelle s'étend une partie tubulaire (26) ayant un diamètre légèrement inférieur à celui de l'ouverture de réception (16.3) dans laquelle elle est insérée à l'aide de sa gradation.

15. Module de classification, d'emmagasinage et de réduction du volume des déchets recyclables selon les revendications 1 et 14, **caractérisé en ce que** le plateau amovible (24) a une rainure (31) dans laquelle est introduite une patte (28) jointe fermement à la poignée rotative (27) de la paroi avant (5), pour associer le mouvement du plateau amovible (24) à celui de la paroi avant (5), ce qui permet l'introduction des déchets à travers l'ouverture circulaire (25) du plateau amovible (24) dans le sac poubelle situé dans la benne de collecte des déchets organiques (16).
